# DEMANDE DE BREVET EUROPEEN

(11) **EP 1 829 454 A1**
(43) Date de publication de la demande: **05.09.2007**
(21) Numéro de dépôt: 07290211.7
(22) Date de dépôt: 19.02.2007
(51) Int. Cl.: A23L 1/03, A23L 1/30, C07C 49/248, A23L 1/275, A23L 1/216

(54) **Utilisation de curcumine comme antioxydant dans la préparation de produits alimentaires**

(30) Priorité: 24.02.2006 FR 0601658
(71) Demandeur: Greenforce, 02200 Villeneuve Saint Germain (FR)
(72) Inventeur: Tricoit, Jean, 02200 Soissons (FR)
(74) Mandataire: Colombet, Alain André

(57) **Abrégé**

L'invention concerne l'utilisation de curcumine comme antioxydant naturel dans la préparation de produits alimentaires, ce qui permet ainsi d'éviter l'utilisation d'antioxydants chimiques, classiquement employés en industrie agro-alimentaire.

## Description

L'invention concerne l'utilisation de curcumine comme antioxydant dans la préparation de produits alimentaires.

De très nombreux procédés de transformation de pommes de terre pour produire des flocons de pomme de terre ont été décrits. Des exemples de ces procédés ont été divulgués par Corning et Willard dans les brevets US n° 2 759 832, 2 780 552 et 2 787 553. Un procédé typique de l'art antérieur consiste à laver d'abord les pommes de terre et, facultativement, à les éplucher après les avoir lavées. Les pommes de terre sont ensuite coupées en tranches, blanchies, refroidies puis cuites à la vapeur. Après la cuisson, les pommes de terre sont passées au presse-purée et, si elles n'ont pas été épluchées avant cette étape, elles peuvent l'être pendant le passage au presse-purée, par exemple au moyen d'un appareil divulgué dans le brevet US n° 3 862 345. Après le passage au presse-purée, on ajoute aux pommes de terre transformées des additifs afin de prévenir divers types de défauts, puis elles sont transformées en flocons qu'on laisse refroidir.

La législation sur les produits déshydratés de pomme de terre est très stricte sur la nature des additifs qui peuvent être employés.

En général, on ajoute au moins 0,1 % environ d'émulsifiant à la purée mouillée ou aux pommes de terre cuites, en tant qu'auxiliaire de transformation pour empêcher que la matière amylacée, et notamment la pomme de terre en purée, colle au rouleau pendant le séchage et le floconnage. On peut trouver de plus grandes quantités d'émulsifiants (jusqu'à 3 %), par exemple si les pommes de terre ont été trop cuites et si la purée de pommes de terre contient des quantités élevées d'amylose.

Les émulsifiants classiquement utilisés sont le monoglycéride distillé, le diglycéride d'huile de soja partiellement hydrogénée, les esters lactyliques, la lécithine ou un dérivé de propylène glycol.

Différents additifs peuvent également être utilisés pour bloquer le fer, qui est abondant dans la pomme de terre, et l'empêcher de réagir avec l'acide chlorogénique de la pomme de terre (le chlorogénate de fer donne des taches et des colorations bleues ou vertes), mais aussi l'empêcher de promouvoir la catalyse par des enzymes d'oxydation comme la polyphénoloxydase ou les lipoxydases. Des dérivés de phosphates tels que le pyrophosphate acide de sodium sont ainsi utilisés pour bloquer le fer.

Le métabisulfite (SO₂) anhydre ou en solution est également employé pour bloquer l'oxydation de la tyrosine. La tyrosine est un acide aminé très abondant dans la pomme de terre et son oxydation produit des quinones par une réaction réversible en présence de l'additif. En absence d'additif, la réaction se poursuit jusqu'à la production d'un composé marron foncé/noir appelé mélanine (le produit fini déshydraté se décolore et tourne au gris plus ou moins foncé).

Des agents acidifiants, comme l'acide citrique, l'acide ascorbique, sont aussi généralement utilisés.

Enfin, le procédé de fabrication de purée de pommes de terre en granule ou flocon emploie des antioxydants (BHA, BHT, acide ascorbique, palmitate d'ascorbyle, extraits de romarin).

Initialement, le butylhydroxytoluène (BHT) combiné au butylhydroxyanisole (BHA), puis plus tard le palmitate d'ascorbyle étaient utilisés. Le BHT a été interdit dans de nombreux pays depuis plusieurs décades parce que carcinogène. Ils sont maintenant remplacés le plus souvent par des combinaisons à base d'acide romarinique et carnosique, tous deux extraits du romarin. D'autres extraits peuvent également être utilisés : café vert et/ou thé vert, seuls ou en combinaison avec les extraits de romarin. Toutefois, tous ces extraits ne sont jamais neutres sur le plan sensoriel, et confèrent des arrière-goûts herbacés, voire sucrés lorsque les doses sont trop fortes.

La technologie initialement développée reposait sur l'emploi de pommes de terre de l'Idaho (USA), à chair blanche, du type Russett Burbank, ce qui interdisait tout export vers la zone Europe, utilisatrice de tubercules de pomme de terre à chair jaune.

Très tôt, les industriels américains ont donc coloré la purée avant déshydratation avec différentes épices colorant en jaune et plus particulièrement du curcuma ("turmeric"), un extrait de la racine de *Curcuma longa.* La couleur du produit fini déshydraté est mesurée avec un colorimètre, généralement un « chromamètre » qui établit une mesure selon l'échelle Hunter « L,a,b ». Les appareils les plus courants sont les chromamètres distribués par MINOLTA.

L'addition de curcuma présente aussi l'avantage de standardiser la couleur du produit fini, malgré les lots différents de pomme de terre (variétés, matière sèche, modes de stockage, saison, etc.).

Dans les années 90, la valeur b=26 pouvait être considérée comme un standard.

L'évolution du marché continental européen, a conduit les industriels à suivre les goûts des consommateurs vers des produits à base de pommes de terre à chair plus jaune, notamment pour les granules et les flocons.

La demanderesse a maintenant démontré que les doses de curcuma désormais employées pour atteindre une valeur de b>= 35 (valeur courante sur le marché) permettent de supprimer l'emploi d'antioxydants et améliorent ainsi le goût et l'odeur du produit fini par rapport aux produits élaborés avec des extraits de romarin.

Les doses de curcuma permettant d'atteindre cette coloration sont généralement de 0,25 à 0,40 % de curcumine en poids par rapport au poids total de la purée déshydratée.

La structure de la molécule active du curcuma, la curcumine, est la suivante:

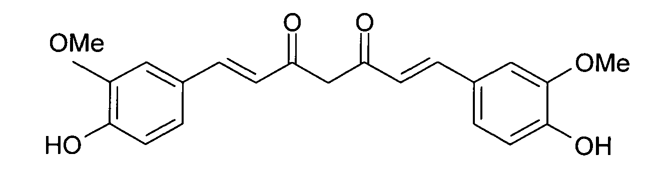

La curcumine semble être le composé du curcuma qui lui confère ses propriétés colorantes connues, très fortes en milieux acides (ce qui est le cas d'une purée complexée avant déshydratation), mais également ses propriétés antioxydantes.

L'invention concerne donc l'utilisation de curcuma ou de curcumine comme un antioxydant naturel. Plus particulièrement l'invention a trait à l'utilisation de curcumine comme un antioxydant dans la préparation d'un produit alimentaire.

La curcumine peut être apportée sous forme de curcuma, c'est-à-dire d'un extrait de racine de *Curcuma longa.*

L'utilisation selon la présente invention permet donc de diminuer la charge de produits chimiques dans les produits agro-alimentaires, de manière à fournir aux consommateurs un produit plus naturel. L'utilisation selon la présente invention permet également d'éviter l'altération de la qualité gustative des produits agro-alimentaires liée à l'utilisation d'extraits de plantes riches en polyphénols purs.

A des doses qui peuvent être aisément déterminées expérimentalement pour chaque type de produit alimentaire, la curcumine ou le curcuma permet de supprimer l'emploi d'antioxydants chimiques de synthèse ou d'extraits de plantes riches en polyphénols.

Préférentiellement, le produit agro-alimentaire est de la purée déshydratée, sous forme de flocons ou granules, produite à partir d'une matière amylacée. Préférentiellement encore, le produit alimentaire est de la purée de pommes de terre déshydratée.

La curcumine peut être utilisée avec une teneur comprise entre 0,25 et 0,45 % en poids par rapport au poids de la purée de pomme de terre déshydratée.

Le produit agroalimentaire peut également être une boisson ou du potage déshydraté.

Pour mettre en oeuvre l'invention, on peut par exemple utiliser un procédé de production de flocons ou granules déshydratés à partir d'un végétal contenant l'amidon qui comprend les étapes consistant à :
- nettoyer et, le cas échéant, éplucher un végétal contenant de l'amidon,
- facultativement trancher et/ou blanchir et refroidir ledit végétal lavé,
- faire cuire ledit végétal lavé et facultativement tranché et blanchi en quantité suffisante pour permettre un passage au presse-purée,
- passer au presse-purée le végétal ainsi cuit, et
- déshydrater et transformer en flocons ou granules la purée obtenue,
dans lequel le passage au presse-purée est mis en oeuvre en présence de curcumine et éventuellement de métabisulfite sans addition d'autre antioxydant.

Au moment du passage au presse-purée, les autres additifs habituellement utilisés, tels que les agents émulsifiants, les agents bloquant le fer, et les agents acidifiants, peuvent être ajoutés.

Les végétaux contenant de l'amidon incluent, sans limitation, les pommes de terre, le maïs, le riz, l'avoine, le blé, les fèves, l'orge, le manioc, le tapioca, et leurs dérivés de type semoule, farine. Ledit végétal comprenant de l'amidon est, de préférence, la pomme de terre (en particulier le tubercule de pomme de terre), le tapioca ou le maïs.

En conséquence, un flocon déshydraté est, de préférence, un flocon de pomme de terre déshydraté. N'importe quelle pomme de terre disponible dans le commerce et utilisée pour préparer des flocons peut être utilisée pour préparer les flocons ou granules déshydratés de la présente invention. Dans la pratique, on peut utiliser, dans la présente invention, des pommes de terre entières ou en rondelles, petits morceaux et tranches fines de pomme de terre, ou des mélanges de ceux-ci, à l'état cru ou ayant fait l'objet d'un conditionnement préalable. On peut produire les flocons ou granules de pomme de terre en utilisant un matériel standard.

Pour la préparation de produits de pomme de terre déshydratés, l'addition de curcuma (à 2% minimum de curcumine (p/p) qui est la valeur commerciale courante), jusqu'à atteindre une couleur jaune de b > ou = 35, mesurée au chromamètre MINOLTA, sur le produit fini, permet de garantir une date d'utilisation optimale de 10 mois minimum avec un conditionnement en film métallisé et sous azote, et une recette de départ classique, mais sans utilisation d'antioxydant chimique autre que le métabisulfite.

De préférence, on ajoute au végétal cuit entre 0,25 et 0,45%, de préférence entre 0,30 et 0,35 % de curcumine, en poids par au poids du produit fini, en particulier de flocons ou granules de purée déshydratée.

L'invention concerne également des flocons ou granules déshydratés obtenus à partir d'un végétal contenant de l'amidon et qui contiennent, en tant qu'anti-oxydant uniquement de la curcumine et éventuellement du métabisulfite.

Ces flocons ou granules déshydratés sont susceptibles d'être obtenus par un procédé tel que décrit ci-dessus.

## Revendications

1. Utilisation de curcumine comme antioxydant dans la préparation d'un produit alimentaire.

2. Utilisation selon la revendication 1, dans laquelle la curcumine est apportée sous forme d'un extrait de racine de *Curcuma longa.*

3. Utilisation selon la revendication 1 ou 2, dans laquelle le produit alimentaire est de la purée de pommes de terre déshydratée.

4. Utilisation selon la revendication 3, dans laquelle la curcumine a une teneur comprise entre 0,25 et 0,45 % en poids par rapport au poids de la purée de pomme de terre déshydratée.

5. Procédé de production de flocons ou granules déshydratés à partir d'un végétal contenant de l'amidon qui comprend les étapes consistant à :
- nettoyer et, le cas échéant, éplucher un végétal contenant de l'amidon,
- facultativement trancher et/ou blanchir et refroidir ledit végétal lavé,
- faire cuire ledit végétal lavé et facultativement tranché et blanchi en quantité suffisante pour permettre un passage au presse-purée,
- passer au presse-purée le végétal ainsi cuit, et
- déshydrater et transformer en flocons ou granules la purée obtenue,
dans lequel le passage au presse-purée est mis en oeuvre en présence de curcumine et éventuellement de métabisulfite, sans addition d'autre antioxydant.

6. Procédé selon la revendication 5, dans lequel la curcumine est apportée sous forme d'un extrait de racine de *Curcuma longa.*

7. Procédé selon la revendication 5 ou 6, dans lequel au moins un émulsifiant, agent bloquant le fer ou agent acidifiant est ajouté au moment du passage au presse-purée.

8. Procédé selon l'une quelconque des revendications 5 à 7, dans lequel le végétal contenant de l'amidon est le tubercule de pomme de terre.

9. Procédé selon l'une quelconque des revendications 5 à 8, dans lequel on ajoute au végétal cuit entre 0,25 et 0,45 % de curcumine, en poids par au poids de flocons ou granules déshydratés.

10. Flocon ou granule déshydraté, susceptible d'être obtenu par le procédé selon l'une quelconque des revendications 5 à 9.
